(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.[7]: **G01F 1/68**, G01F 1/69

(21) Anmeldenummer: **00904778.8**

(22) Anmeldetag: **24.02.2000**

(86) Internationale Anmeldenummer:
**PCT/CH00/00101**

(87) Internationale Veröffentlichungsnummer:
**WO 00/052428 (08.09.2000 Gazette 2000/36)**

(54) **GASZÄHLER**

GAS METER

COMPTEUR A GAZ

(84) Benannte Vertragsstaaten:
**AT BE CH CY DE DK ES FI FR GB GR IE IT LI LU MC NL PT SE**

(30) Priorität: **01.03.1999 DE 19908664**

(43) Veröffentlichungstag der Anmeldung:
**01.08.2001 Patentblatt 2001/31**

(73) Patentinhaber: **ABB RESEARCH LTD.**
**8050 Zürich (CH)**

(72) Erfinder:
- **BYATT, Anthony**
  **CH-5313 Klingnau (CH)**
- **MATTER, Daniel**
  **CH-5200 Brugg (CH)**
- **KLEINER, Thomas**
  **CH-5415 Rieden-Nussbaumen (CH)**
- **PRETRE, Philippe**
  **CH-5405 Baden-Dättwil (CH)**

(74) Vertreter: **ABB Patent Attorneys**
**c/o ABB Schweiz AG**
**Brown Boveri Strasse 6**
**5400 Baden (CH)**

(56) Entgegenhaltungen:

| EP-A- 0 373 965 | EP-A- 0 784 200 |
|---|---|
| WO-A-98/36247 | GB-A- 1 463 507 |
| GB-A- 1 516 986 | GB-A- 2 203 546 |
| US-A- 4 507 653 | US-A- 4 918 995 |
| US-A- 5 107 138 | US-A- 5 220 830 |

- **TOKUDAI NEDA ET AL: 'A polysilicon flow sensor for gas flowmeters' SENSORS AND ACTUATORS Bd. A54, 1996, Seiten 626 - 631**
- **ROBADEY J. ET AL: 'Two dimensional integrated gas flow sensors by CMOS IC technology' J.MICROMECH.MICROENG Bd. 5, 1995, Seiten 243 - 250**
- **MAYER F.: 'Scaling of thermal CMOS gas flow microsensors:experiment and simulation' PROC. IEEE MICRO ELECTRO MECHANICAL SYSTEMS 1996, Seiten 116 - 121**
- **MAYER F.: 'Single-chip CMOS anemometer' PROC.IEEE INTERNATIONAL ELECTRON DEVICES MEETING 1997, Seiten 895 - 898**
- **GOEPEL ET AL: "SENSORS VOL.7", 1994, VCH, WEINHEIM**

## Beschreibung

### Technisches Gebiet

Die Erfindung bezieht sich auf eine Anordnung zur Durchflußmessung eines Gases gemäss Oberbegriff des Patentanspruches 1.

### Stand der Technik

Gaszähler sollen zwecks Kostenabrechnung die gesamte von einem Konsumenten bezogene Gasmenge feststellen. Sie müssen einen relativ grossen Messbereich abdecken können sowie gegenüber Druck- und Temperaturschwankungen möglichst unempfindlich sein.

Heute werden als Gaszähler, insbesondere im Haushalts- und Gewerbebereich, hauptsächlich Vorrichtungen eingesetzt, welche auf einer Volumenmessung des durchgeflossenen Gases basieren. Typische Beispiele hierfür sind die Verdrängungsgaszähler mit dem wohl am häufigsten verwendeten Gaszähler, dem sogenannten Balgengaszähler, wie er in U. Wernekinck, Gasmessung und Gasabrechnung, Vulkan-Verlag 1996, 20-31, beschrieben ist. Der Balgengaszähler verfügt über zwei Messkammern, welche der Reihe nach wechselseitig durch das durchströmende Gas gefüllt und wieder entleert werden. Während eine Kammer sich füllt, verdrängt sie in der anderen das Gas. Die Füllungen beziehungsweise Leerungen werden gezählt und ergeben multipliziert mit dem Messkammervolumen das Gesamtvolumen des durchgeströmten Gases. Da das Volumen des Gases jedoch mit der Änderung von Umgebungstemperatur und Druck variiert, unterliegen diese Messungen Fehlern. Im Sommer, wenn das Gas warm ist und ein grösseres Volumen einnimmt, würde der Konsument mehr für denselben kalorimetrischen Wert des Gases zahlen als im Winter. Die heutigen Balgengaszahler werden deshalb mit einfachen mechanischen oder elektrischen Vorrichtungen zur Temperaturkompensation versehen, deren Wirkung jedoch begrenzt ist.

Ein kompensierter Verdrängungsgaszähler anderer Art ist in Furio Cascetta et al., The future domestic gas meter: Review of current developments, Measurement 13 (1994), 129-145, beschrieben. Ferner ist in dieser Publikation ein Gaszähler für den Haushaltsbereich offenbart, welcher aus einer Kombination eines Rückkopplungs-Durchflusszählers und eines thermischen Durchflussmessers besteht. Im Rückkopplungs-Durchflusszähler wird ein Teil des Gasstromes in den Hauptstrom zurückgeleitet. Ein thermischer oder piezoelektrischer Sensor detektiert die Frequenz dieser Rückkopplung, welche proportional zum volumetrischen Gasfluss ist. Da dieser Rückkopplungs-Durchflusszähler eine zu geringe Bandbreite aufweist und bei schwachen Gasströmen ungenügend ist, wird er mit einem thermischen Durchflussmesser kombiniert. Dieser thermische Durchflussmesser besteht aus einer Silizium-Struktur, auf welcher zwei Temperatursensoren, im allgemeinen Dioden, beidseitig eines elektrischen Heizelementes angeordnet sind. Wird die Silizium-Struktur von einem Gas durchströmt, so misst der in Strömungsrichtung obere Temperatursensor eine tiefere Temperatur als der untere. Die Temperaturdifferenz ist dabei proportional zur Strömungsgeschwindigkeit des Gases. Der thermische Durchflussmesser wird ausschliesslich zur Selbstkalibrierung des Rückkopplungs-Durchflusszählers verwendet, da er, wie in der Publikation festgehalten wird, im Gegensatz zum Rückkopplungs-Durchflusszähler von den physikalischen und thermischen Eigenschaften des zu messenden Gases abhänge.

Gaszähler, welche auf volumetrischen Messungen beruhen, sind jedoch trotz Kompensationen stets fehlerbehaftet und führen zu einer inkorrekten Gasrechnung. Der Grund hierfür liegt im Messkonzept, da der Gasverbrauch im Endeffekt nicht dem durchflossenen Volumen, sondern der bezogenen Gasmenge, genauer der Gasmasse, entspricht.

WO 99/06800 offenbart ferner ein Gasmeter, welches eine Durchflussrate bestimmt. Hierfür werden zwei Thermistoren erwärmt und ihr Abkühlvorgang beobachtet.

Aus dem Stand der Technik sind ferner Messgeräte bekannt, welche nicht als Gaszähler, sondern als Gasdurchflussmesser zur Kontrolle, Steuerung und Optimierung von Prozessparametern in Industrieanlagen eingesetzt werden. Diese Gasdurchflussmesser bestimmen im allgemeinen entweder die Durchflussgeschwindigkeit oder die Massendurchflussrate.

So sind Gasmassen-Durchflussmesser bekannt, welche in der Halbleitertechnik zur Prozesssteuerung verwendet werden. Beispielsweise vergleicht S.A. Tison, A critical evaluation of thermal mass flow meters, J. Vac. Sci. Technol. A 14(4), Jul/Aug 1996, 2582-2591, verschiedene thermische Massen-Durchflussmesser, welche alle den Wärmetransfer zwischen einer geheizten Rohrwandung und dem Gasstrom messen. Sie arbeiten nach zwei Grundverfahren, welche ebenfalls in W.C. Baker, Mass Flowmeters, Measurement & Control, September 1997, 221-222, beschrieben sind: in einem ersten Verfahrenstyp wird ein Rohrabschnitt mit einer konstanten Eingangsleistung geheizt und die Temperatur auf beiden Seiten des Rohrabschnittes gemessen. Wird der Röhrenabschnitt von einem Gas durchströmt, so weist das in Strömungsrichtung obere Ende des Rohrabschnittes eine tiefere Temperatur auf als das untere Ende, wobei die Temperaturdifferenz linear proportional zur Massendurchflüssrate, also zum molaren Massendurchfluss, ist. Im zweiten Verfahrenstyp wird das Rohr auf eine konstante Temperatur geheizt und die hierfür notwendige Eingangsleistung gemessen. Diese ist proportional zum Massendurchfluss innerhalb des Rohres.

Ein kompaktes Messgerät, welches die Durchflussgeschwindigkeit bestimmt, ist aus J. Robadey et al., Two dimensional integrated gas flow sensors by CMOS IC technology, J. Micromech. Microeng. 5(1995) 243-250 sowie aus F. Mayer, et al., Scaling of thermal CMOS gas flow microsensors: experiment and simulation, Proc. IEEE Micro Electro Mechanical Systems, (IEEE, 1996), 116-121, bekannt. Es handelt sich dabei um ein Anemometer bestehend aus einem integrierten CMOS-Sensor, welcher im wesentlichen aus zwei gekreuzten dielektrischen Mikrobrücken, zwei Paaren rechtwinklig zueinander angeordneter Thermosäulen und einer in Strömungsrichtung mittig zwischen den Thermosäulen angeordneten Heizung in Form eines integrierten Polysilizium-Widerstandes besteht. Ein zu messendes Gas strömt über die Oberfläche des Sensors und wird von der Heizung erwärmt. Die Heizleistung beträgt typischerweise weniger als 1 mW. Die zwei Thermosäulen messen die Temperatur beziehungsweise die Temperaturdifferenz des über oder durch den Sensor strömenden Gases und liefern ein Spannungssignal U, welches sich proportional zur Temperaturdifferenz $\Delta T$ verhält. Für kleine Geschwindigkeiten ist dieses Spannungssignal U proportional zur Geschwindigkeit des Gases. Ferner lässt sich mit diesem Sensor die Strömungsrichtung feststellen.

In F. Mayer et al., Single-Chip CMOS Anemometer, Proc. IEEE, International Electron Devices Meeting (IEDM, 1997) 895-898, wird das obengenannte CMOS-Anemometer zusammen mit einer Leistungssteuerungr einer Signalkonditionierung und einem A/D Wandler in einen Einzelchip in Flip-Chip Technik integriert und seine Einsatzmöglichkeiten zur Messung von Windgeschwindigkeiten gezeigt.

Aus der EP 0 784 200 ist eine Anordnung zur Durchflussmessung eines Gases mit einem Anemometer bekannt. Das Anemometer ist in einem Hohlraum in einem Bypassrohr zu einem Hauptleitungsrohr einer Gasleitung angeordnet und bestimmt mittels Messung einer Temperaturänderung des das Anemometer durch- oder überströmenden Gases eine Gasmassen-Durchflussrate im Bypassrohr. Nachteilig ist, dass das Anemometer einen diskreten Aufbau mit einem Heizelement und Dioden auf einer Leiterplatte aufweist. Die diskreten Elemente bedingen aufgrund ihres Platzbedarfs eine relativ grosse Bauweise des Anemometers, einen entsprechenden Bedarf an Heizleistung und bei grossen Strömungen eine Störung des laminaren Flusses im Bypassrohr mit entsprechend eingeschränktem Messbereich. Nachteilig ist auch, dass der funktionelle Zusammenhang zwischen der Gesamt-Durchflussrate durch das Hauptleitungsrohr und der gemessenen Durchflussrate im Bypassrohr nicht näher definiert ist und für jede Bypass-Konfiguration erneut empirisch durch Kalibration bestimmt werden muss. Die Anordnung besitzt also eine unbefriedigende Messgenauigkeit oder muss jeweils vor Ort über den gesamten Messbereich aufwendig kalibriert werden, so dass sie insgesamt als Gaszähler zur Bestimmung einer konsumierten Gasmenge wenig geeignet ist.

In der WO 98/36247 wird ein Durchfluss-Messgerät offenbart, in dem das Anemometer aus einer Mehrzahl von mit Heizelementen und Temperaturerfassungselementen, z. B. CMOS-Dioden, versehenen, thermisch voneinander isolierten Bereichen besteht, die an einer Membran angeordnet sind. Diese Anordnung dient zur Detektion einer Strömungsgeschwindigkeit und einer Strömungsrichtung.

In der EP 0 373 965 wird ein Durchfluss-Messgerät angegeben, bei dem ein Durchflussanemometer im Hauptstromkanal angeordnet ist und zur Korrektur eines Massenflusssignals ein statisches Anemometer, insbesondere ein Dichtesensor, in einer Kammer mit kombiniertem Ein- und Ausgang angeordnet ist. Die Anordnung dient zu einer von der Gasart unabhängigen Massenflussmessung.

In der GB 1 463 507 wird ein Durchfluss-Messgerät offenbart, bei dem der Durchflusssensor aus Thermistoren besteht und zusammen mit einer Teilchenfalle und einem Dichtesensor in einem Bypass angeordnet ist. Es wird eine Probe vom Hauptstrom in den Bypass weggeleitet und der Massenfluss und die Dichte der Probe bestimmt. In einem Ausführungsbeispiel wird angegeben, dass ein proportionales Verhalten von Probe zu Gesamtstrom durch Modifikation der Strömung im Bypass erzielbar ist.

In dem U. S. Pat. No. 5,220,830 wird ein Anemometer-Durchflussmessgerät mit einem Halbleiterchipsensor im Hauptstrom und mit einer Partikelfalle zur Ausscheidung von Partikeln offenbart.

Aus dem Buch "Sensors, A Comprehensive Survey", W.Göpel, J. Hesse, J. N. Zemel, Vol.7, VCH, Weinheim, ist es bekannt, eine Durchflussrate im Bypass proportionale zur Durchflussrate im Hauptstrom zu erzeugen, indem ein laminarer Flussabschnitt im Hauptrohr vom Bypassrohr umgangen wird.

Tokudai Neda et al "A polysilicon flow Sensors for gas flowmeters". sensor and Actuators A 54(1996) 626-631 offenbart die Verwendung eines CMOS Heissdraht-Anemometers in Gasdurchfluss messgeräten für Haushalte.

US-A-4 918 995 offenbart darüber hinaus die Verwendung eines Heissdraht-Anemometers in einem Gaszählers.

**Darstellung der Erfindung**

Es ist Aufgabe der Erfindung, einen Gaszähler zu schaffen, der eine erhöhte Meßgenauigkeit aufweist. Diese Aufgabe wird durch die Anordnung zur Durchflussmessung mit den Merkmalen des unabhängigen Patentanspruchs gelöst.

Die Erfindung basiert auf der Erkenntnis, dass sich ein Anemometer zur Messung der Durchflussgeschwindigkeiten eines Fluids als Gaszähler zur Bestimmung der vom Konsumenten bezogenen Gasmenge einsetzen lässt, indem es zur Bestimmung der Massendurchflussrate eingesetzt wird. Die Rate, mit welcher Wärme vom Heizelement auf vorbeiströmende Gasmoleküle übertragen wird, ist nämlich abhängig von der Dichte des Gases. Je mehr Moleküle pro Volumeneinheit vorhanden sind, umso mehr Wärmepakete können abtransportiert werden, was in einer grösseren Temperaturdifferenz $\Delta T$ resultiert.

Zur Bestimmung des Wärmetransportes wird die Temperatur des Gases vor und nach Passieren eines Heizelementes gemessen.

Durch die Verwendung eines auf CMOS-Technik basierenden Anemometers ist es zudem möglich, einen kompakten und kostengünstigen statischen Gaszähler zu schaffen, welcher trotz hoher Messgenauigkeit einen geringen Energiebedarf aufweist. Eine netzunabhängige Energievesorgung des Anemometers wird damit möglich.

Dabei beinhaltet der erfindungsgemässe Gaszähler als Anemometer einen bekannten Gassensor, welcher zur Bestimmung der Gasgeschwindigkeit eingesetzt wird und in den eingangs erwähnten Publikationen J. Robadey et al., Two dimensional integrated gas flow sensors by CMOS IC technology, J. Micromech. Microeng. 5(1995) 243-250, in F. Mayer, et al., Scaling of thermal CMOS gas flow microsensors: experiment and simulation, Proc. IEEE Micro Electro Mechanical Systems, (IEEE, 1996), 116-121, sowie in F. Mayer, et al., Single-Chip CMOS Anemometer, Proc. IEEE, International Electron Devices Meeting (IEDM, 1997) 895-898, offenbart ist.

In einer einfachsten Ausführungsform des erfindungsgemässen Gaszählers wird lediglich ein einziges CMOS-Anemometer zur Bestimmung der Gasmassen-Durchflussrate eingesetzt, wobei es in einem Bypassrohr angeordnet ist, das eine Rohrverengung des Hauptleitungsrohres umgeht, wobei die Rohrverengung einen definierten Querschnitt aufweist und sich über eine definierte Länge erstreckt derart, dass ein Druckabfall $\Delta p$ über dem Bypassrohr als definierte Funktion eines volumetrischen Flusses $\Phi_V$ in dem Hauptleitungsrohr vorgebbar ist und sich die gesamte Gasmassen-Durchflussrate berechnen lässt.

Eine andere Ausführungsform weist mehrere Anemometer auf, deren Messwerte gemittelt werden.

In einer weiteren Ausführungsform, welche eine erhöhte Messgenauigkeit aufweist, beinhaltet der Gaszähler zusätzlich mindestens einen Dichtesensor, welcher zur Messwertkorrektur des Anemometers dient. Der Dichtesensor ist in einer ersten Ausführungsform in der Hauptleitung angeordnet, in einer anderen Ausführungsform ist er auf demselben Chip integriert wie das Anemometer.

Weitere vorteilhafte Ausführungsformen gehen aus den abhängigen Patentansprüchen hervor.

## Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:

Figur 1 einen Ausschnitt aus einer Gasleitung mit einem erfindungsgemässen Gaszähler gemäss einer ersten Ausführungsform der Erfindung; und

Figur 2 einen vergrösserter Ausschnitt aus Figur 1.

## Wege zur Ausführung der Erfindung

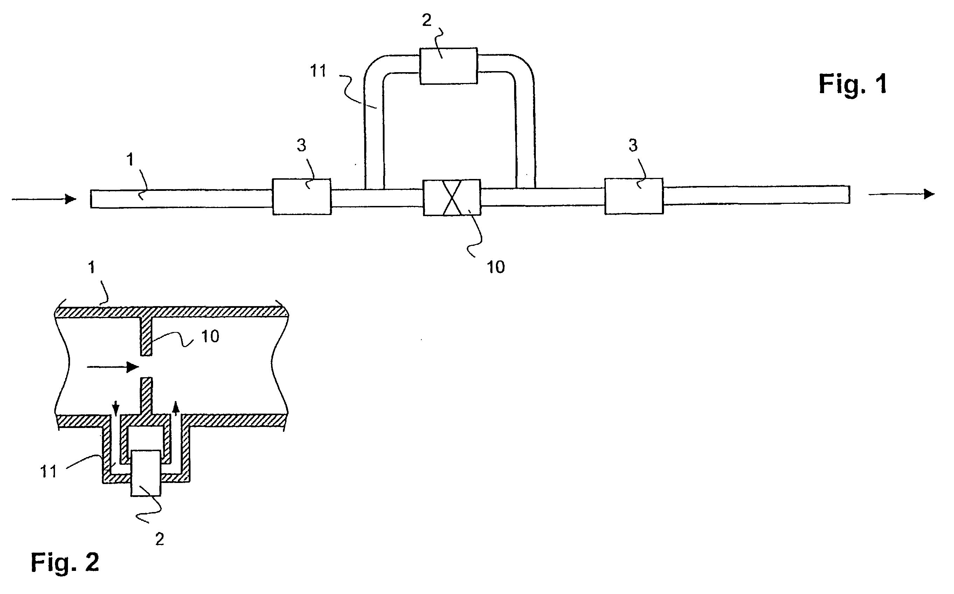

In Figur 1 ist eine Gasleitung dargestellt, welche mit einem erfindungsgemässen Gaszähler versehen ist. Die Gasleitung besteht aus einem Hauptleitungsrohr 1, welches mit einer gebäudeexternen, hier nicht dargestellten Gasnetzleitung verbunden ist. Dieses Hauptleitungsrohr 1 weist eine Rohrverengung 10 mit einem definierten Querschnitt auf. Ein Beispiel einer derartigen Verengung ist in der Figur 2 dargestellt und wird weiter unten näher erläutert.

Vom Hauptleitungsrohr 1 zweigt ein Bypassrohr 11 ab, welches einen Bypass zur Rohrverengung 10 bildet. In diesem Bypassrohr ist ein CMOS-Anemometer 2 mit einer Polysiliziüm- und Aluminium-Struktur im Sandwich-Aufbau angeordnet, wie es in den eingangs erwähnten Publikationen J. Robadey et al., J. Micromech. Microeng. 5(1995), in F. Mayer, et al., Proc. IEEE Micro Electro Mechanical Systems, (IEEE, 1996), und in F. Mayer, et al., Proc. IEEE, International Electron Devices Meeting (IEDM, 1997) beschrieben ist. Ein zu messendes Gas strömt über die Oberfläche des Sensors 2 und wird von der integrierten Heizung erwärmt. Gleichabständig in Strömungsrichtung vor und nach dem Heizelement wird die Temperatur beziehungsweise die Temperaturdifferenz des über oder durch den Sensor 2 strömenden Gases gemessen. Dies erfolgt über mindestens zwei Mittel zur Messung der Temperatur, insbesondere mittels Thermoelementen. Dabei ist ein erstes Mittel in Strömungsrichtung vor und ein zweites Mittel in Strömungsrichtung nach dem Heizelement angeordnet. Es wird ein Spannungssignal U erhalten, welches sich proportional zur Temperaturdifferenz $\Delta T$ verhält. Da die Wärmeübertragungsrate von der Anzahl Moleküle pro Volumeneinheit und somit von der Gasmasse abhängig ist, verhält sich das erhaltene Spannungssignal U proportional zur Gasmassen-Durchflussrate $dM_{Bypass}/dt$ durch den Bypass 11.

Da die Hauptleitung 1 im Bereich des Bypasses 11 eine Rohrverengung 10 mit definiertem Querschnitt aufweist, ist der Druckabfall über den Bypass 11 ebenfalls definiert, so dass sich die gesamte Gasmassen-Durchflussrate berechnen lässt. Es ist somit

$$dM/dt = f(U) = S_1 \cdot \alpha \cdot dN/dt \cong S(dM/dt) \cdot U(\Delta T)$$

mit

S als Proportionalitätsfaktor und

$$\alpha = \kappa/(\rho \cdot c_p) \text{ mit den Gaswerten}$$

κ: Wärmeleitfähigkeit
ρ: Dichte
$c_p$: Wärmekapazität und
N: Anzahl Moleküle

S(dM/dt) ist dabei ein empirisch zu ermittelnder Kalibrierungswert. Die Werte des mittels des erfindungsgemässen Gaszählers bestimmten Gasverbrauchs weisen eine grössere Genauigkeit auf als die bekannten volumetrischen Messverfahren. In einer einfachsten Ausführungsform genügt das Anemometer als Messelement, um die konsumierte Gasmenge zu bestimmen.

In dem hier dargestellten bevorzugten Ausführungsbeispiel ist jedoch zusätzlich mindestens ein Dichtesensor 3 zur Bestimmung der Gasdichte vorhanden. Das Ergebnis dieser Dichtemessung dient im erfindungsgemässen Gaszähler als Messwertkorrektur für das massenbestimmende Anemometer 2. In der Berechnung der gesamten Gasmassen-Durchflussrate wird nun ein weiterer Faktor S* hinzugefügt, welcher dichteabhängig ist und ebenfalls empirisch bestimmt wird. Es ist

$$dM/dt = S^*(\rho) \cdot S(dM/dt) \cdot U(\Delta T)$$

Der Dichtesensor 3 lässt sich, wie in Figur 1 dargestellt, in der Hauptleitung 1, in Strömungsrichtung vor der Abtrennung des Bypasses 11 oder nach der Wiedervereinigung mit dem Bypass 11 anordnen. Vorzugsweise sind zwei Dichtesensoren 3 vorhanden, wobei einer vor und einer nach dem Bypass 11 angeordnet ist. Diese Anordnung weist den Vorteil auf, dass sich ein von der restlichen Gasleitung unabhängiger Dichtedifferenzwert ermitteln lässt, welcher zur Messwertkorrektur des Anemometers benützbar ist.

In einer anderen Ausführungsform befindet sich der Dichtesensor im Bypassrohrn. Dies weist den Vorteil auf, dass er gemeinsam mit dem Anemometer 2 in demselben Chip integrierbar ist.

Als Dichtesensor 3 eignet sich insbesondere ein Sensor mit zwei Quarzresonatoren, wie er in EP 0'582'045 beschrieben ist. Einer der Resonatoren ist in den Gasstrom eingetaucht, wobei seine Resonanzfrequenz durch das vorbeiströmende Gas beeinflusst wird. Diese Resonanzfrequenz wird der Frequenz des in Vakuum befindlichen Referenzoszillators überlagert, um die Temperaturabhängigkeit des Quarz zu kompensieren. Die resultierende Differenzfrequenz verhält sich proportional zur Gasdichte, so dass die Gasdichte direkt messbar ist.

In Figur 2 ist die Rohrverengung 10 gemäss Figur 1 in vergrössertem Massstab dargestellt. Es handelt sich um eine sogenannte O-Ring-Verengung, bei welcher das Rohr lokal an einer relativ kurzen Strecke im Vergleich zum Rohrdurchmesser verengt wird. Der Druckabfall beträgt

$$\Delta p = A_{fc}^{-2} \cdot (\xi \cdot \rho/2) \cdot \Phi_v^{2}$$

wobei

$A_{fc}$    die für den Durchfluss freie Querschnittsfläche,
ξ        ein dimensionsloser Formfaktor,
ρ        die Dichte des Gases und
$\Phi_v$     der volumetrische Fluss ist.

Der erfindungsgemässe Gaszähler mit seinem Anemometer 2 bildet ein genaues Messgerät zur Erfassung der effektiv konsumierten Gasmenge.

**Bezugszeichenliste**

| | |
|---|---|
| 1 | Gasleitungsrohr |
| 10 | Rohrverengung |
| 11 | Bypassrohr |
| 2 | Anemometer |
| 3 | Dichtesensor |

**Patentansprüche**

**1.** Anordnung zur Durchflussmessung eines Gases mit einem Anemometer (2), wobei das Anemometer (2) mittels Messung einer Temperaturänderung des das Anemometer (2) durch- oder überströmenden Gases eine Gasmassen-Durchflussrate bestimmt, wobei ferner das Anemometer (2) ein Single-Chip CMOS-Anemometer (2) ist, das zusammen mit einer Leistungssteuerung, einer Signalkonditionierung und einem A/D-Wandler in einen Einzelchip integriert ist, **dadurch gekennzeichnet, dass**

a) die Anordnung durch die Verwendung des auf CMOS-Technik basierenden Anemometers (2) als kompakter statischer Gaszähler mit geringem Energiebedarf zur Bestimmung einer konsumierten Gasmenge ausgebildet ist,
b) das Anemometer (2) in einem Bypassrohr (11) zu einem Hauptleitungsrohr (1) einer Gasleitung angeordnet ist und eine Gasmassen-Durchflussrate $dM_{Bypass}/dt$ durch das Bypassrohr (11) bestimmt,
c) das Bypassrohr (11) eine Rohrverengung (10) des Hauptleitungsrohres (1) umgeht, die einen definierten Querschnitt aufweist und sich über eine definierte Länge erstreckt derart, dass ein Druckabfall Δp über dem Bypassrohr (11) als eine definierte Funktion eines volumetrischen Flusses $\Phi_V$ in dem Hauptleitungsrohr (1) vorgegeben ist, so dass sich eine gesamte Gasmassen-Durchflussrate dM/dt als eine Funktion f (U) eines Spannungssignals U des Anemometers (2) berechnen lässt, welches Spannungssignal U sich proportional zur Gasmassen-Durchflussrate $dM_{Bypass}$/dt durch das Bypassrohr (11) verhält, und

d) dass die Rohrverengung (10) eine O-Ring-Verengung (10) ist, bei welcher das Hauptleitungsrohr (1) lokal an einer relativ kurzen Strecke im Vergleich zu einem Rohrdurchmesser verengt ist und der Druckabfall $\Delta p = A_{fc}^{-2} \cdot (\xi \cdot \rho / 2) \cdot \Phi_V^2$ beträgt, wobei $A_{fc}$ eine für den Durchfluss freie Querschnittsfläche, $\xi$ ein dimensionsloser Formfaktor und $\rho$ eine Dichte des Gases ist.

**2.** Anordnung zur Durchflussmessung nach Anspruch 1, **dadurch gekennzeichnet, dass** eine netzunabhängige Energieversorgung des Anemometers (2) vorhanden ist.

**3.** Anordnung zur Durchflussmessung nach Anspruch 1, **dadurch gekennzeichnet, dass** das Single-Chip CMOS-Anemometer (2) mit der Leistungsteuerung, der Signalkonditionierung und dem A/D-Wandler in dem Einzelchip in Flip-Chip Technik integriert ist.

**4.** Anordnung zur Durchflussmessung nach Anspruch 1, **dadurch gekennzeichnet, dass** das Single-Chip CMOS-Anemometer (2) eine Polysilizium- und Aluminium-Struktur in einem Sandwich-Aufbau aufweist.

**5.** Anordnung zur Durchflussmessung nach Anspruch 1, **dadurch gekennzeichnet, dass** das Anemometer (2) ein Heizelement und mindestens zwei Mittel zur Messung der Temperatur aufweist, wobei ein erstes Mittel zur Messung der Temperatur in Strömungsrichtung vor und ein zweites Mittel zur Messung der Temperatur in Strömungsrichtung nach dem Heizelement angeordnet ist.

**6.** Anordnung zur Durchflussmessung nach Anspruch 1, **dadurch gekennzeichnet, dass** die Anordnung mindestens einen Dichtesensor (3) aufweist zur Bestimmung der Dichte eines strömenden Gases, wobei der Dichtesensor (3) ein Messkorrekturmittel für das Anemometer (2) ist.

**7.** Anordnung zur Durchflussmessung nach Anspruch 6, **dadurch gekennzeichnet, dass** der Dichtesensor (3) mit dem Anemometer (2) in einem gemeinsamen Chip integriert ist.

**Claims**

**1.** A device for flow metering of a gas comprising an anemometer (2), wherein the anemometer (2) determines a gas mass flow rate by means of measuring a temperature change of the gas flowing through or over the anemometer (2), wherein further the anemometer (2) is a single-chip CMOS anemometer (2) which, together with a power controller, a signal conditioning and an A/D converter, is integrated into a single chip, **characterized in that**

a) the device is designed, by use of the anemometer (2) based on CMOS technology, as a compact static gas meter having a low energy consumption for determining a quantity of consumed gas,

b) the anemometer (2) is arranged in a bypass pipe (11) to a main pipeline (1) of a gas duct and determines a gas mass flow rate $dM_{Bypass}$/dt through the bypass pipe (11),

c) the bypass pipe (11) circumvents a constriction (10) in the main pipeline (1), the constriction having a defined cross section and extending over a defined length such that a pressure drop $\Delta p$ over the bypass pipe (11) is predetermined as a defined function of a volumetric flow $\Phi_V$ in the main pipeline (1), so that a total gas mass flow rate dM/dt can be calculated as a function f (U) of a voltage signal U of the anemometer (2), which voltage signal U behaves proportional to the gas mass flow rate $dM_{Bypass}$/dt through the bypass pipe (11), and

d) the constriction (10) is an O-ring constriction (10), in which the main pipeline (1) is narrowed locally over a relatively short section compared to a pipe diameter and the pressure drop is $\Delta p = A_{fc}^{-2} \cdot (\xi \cdot \rho / 2) \cdot \Phi_V^2$, wherein $A_{fc}$ is a cross-sectional area free for the flow, $\xi$ is a dimensionless form factor, and $\rho$ is a density of the gas.

**2.** The device for flow metering as claimed in claim 1, **characterized in that** a power supply of the anemometer (2) independent of the mains is present.

**3.** The device for flow metering as claimed in claim 1, **characterized in that** the single-chip CMOS anemometer (2), together with the power controller, the signal conditioning and the A/D converter, is integrated into the single chip using flip-chip technology.

**4.** The device for flow metering as claimed in claim 1, **characterized in that** the single-chip CMOS anemometer (2) has a poly-silicon and aluminum structure in a sandwich construction.

5. The device for flow metering as claimed in claim 1, **characterized in that** the anemometer (2) comprises a heating element and at least two means for measuring the temperature, wherein a first means for measuring the temperature is arranged upstream in the flow direction and a second means for measuring the temperature is arranged downstream in the flow direction of the heating element.

6. The device for flow metering as claimed in claim 1, **characterized in that** the device comprises at least one density sensor (3) for determining the density of a flowing gas, the density sensor (3) being a measurement correction means for the anemometer (2).

7. The device for flow metering as claimed in claim 6, **characterized in that** the density sensor (3) is integrated with the anemometer (2) in one common chip.

**Revendications**

1. Dispositif pour la mesure du débit d'un gaz avec un anémomètre (2), l'anémomètre (2) déterminant un débit de masse gazeuse au moyen d'une mesure d'une variation de température du gaz passant à travers ou au-dessus de l'anémomètre (2), l'anémomètre (2) étant également un anémomètre CMOS monopuce (2), qui est intégré conjointement avec une commande de puissance, un conditionnement de signal et un convertisseur analogique/numérique dans une puce unique, **caractérisé en ce que**

a) le dispositif est réalisé par l'utilisation de l'anémomètre (2) basé sur la technique CMOS comme compteur de gaz statique et compact avec un faible besoin d'énergie pour la détermination d'une quantité de gaz consommée,

b) l'anémomètre (2) est disposé dans un tuyau de dérivation (11) allant vers un tuyau de conduite principale (1) d'une conduite de gaz et détermine un débit de masse de gaz $dM_{dériv}/dt$ traversant le tuyau de dérivation (11),

c) le tuyau de dérivation (11) contourne un rétrécissement de tuyau (10) du tuyau de conduits principale (1), qui présente une section définie et s'étend sur une longueur définie de telle sorte qu'une chute de pression $\Delta p$ au-dessus du tuyau de dérivation (11) soit prédéfinie comme une fonction définie d'un flux volumétrique $\phi_V$ dans le tuyau de conduite principale (1), de sorte qu'on puisse calculer un débit total de masse de gaz $dM/dt$ comme une fonction f (U) d'un signal de tension U de l'anémomètre (2), lequel signal de tension U se comporte de façon proportionnelle au débit de masse de gaz $dM_{dériv}/dt$ passant par le tuyau de dérivation (11), et

d) le rétrécissement de tuyau (10) est un rétrécissement de joint torique (10) sur lequel le tuyau de conduite principale (1) est rétréci localement sur une section relativement courte par rapport à un diamètre de tuyau et la chute de pression $\Delta p = A_{fc}^{-2} \cdot (\xi \cdot \rho / 2) \cdot \phi_V^2$, $A_{fc}$ étant une surface de section libre pour l'écoulement, $\xi$ un facteur de forme sans dimension et $\rho$ une densité du gaz.

2. Dispositif pour la mesure du débit selon la revendication 1, **caractérisé en ce qu'**il y a une alimentation en énergie de l'anémomètre (2) qui est indépendante du réseau.

3. Dispositif pour la mesure du débit selon la revendication 1, **caractérisé en ce que** l'anémomètre CMOS monopuce (2) est intégré avec la commande de puissance, le conditionnement de signal et le convertisseur analogique/numérique dans la puce unique dans la technique flip-chip.

4. Dispositif pour la mesure du débit selon la revendication 1, **caractérisé en ce que** l'anémomètre CMOS monopuce (2) représente une structure de polysilicium et une structure d'aluminium de type sandwich.

5. Dispositif pour la mesure du débit selon la revendication 1, **caractérisé en ce que** l'anémomètre (2) présente un élément de chauffage et au moins deux moyens pour la mesure de la température, un premier moyen pour la mesure de la température étant disposé dans le sens d'écoulement en amont de l'élément de chauffage et un deuxième moyen pour la mesure de la température dans le sens d'écoulement en aval de l'élément de chauffage.

6. Dispositif pour la mesure du débit selon la revendication 1, **caractérisé en ce que** le dispositif présente au moins un capteur de densité (3) pour la détermination de la densité d'un gaz circulant, le capteur de densité (3) étant un moyen de correction de mesure pour l'anémomètre (2).

7. Dispositif pour la mesure du débit selon la revendication 6, **caractérisé en ce que** le capteur de densité (3) est intégré avec l'anémomètre (2) dans une puce commune.

**Fig. 1**

**Fig. 2**

EP 1 119 744 B1